# EUROPEAN PATENT APPLICATION

(11) **EP 3 971 798 A1**
(43) Date of publication of application: **23.03.2022**
(21) Application number: 20812528.6
(22) Date of filing: 18.05.2020
(51) Int. Cl.: G06N 20/00

(54) **DATA PROCESSING METHOD AND APPARATUS, AND COMPUTER READABLE STORAGE MEDIUM**

(30) Priority: 31.05.2019 CN 201910468502
(71) Applicant: Jingdong City (Beijing) Digits Technology Co., Ltd., Beijing 100086 (CN)
(72) Inventor: GAO, Jiandong, Beijing 100176 (CN); LIU, Yang, Beijing 100176 (CN); ZHANG, Junbo, Beijing 100176 (CN); ZHENG, Yu, Beijing 100176 (CN)
(74) Representative: Ruuskanen, Juha-Pekka
(86) International application number: PCT/CN2020/090823
(87) International publication number: WO 2020/238677

(57) **Abstract**

A data processing method and apparatus, and a computer readable storage medium, relating to the technical field of computers. The method comprises: creating, according to the overlap of the original data from different data platforms, a training data set by combining the original data from the different data platforms; classifying the data in the training data set according to attributes of the data in the training data set to obtain a plurality of data subsets; determining, according to the type of each data subset, a machine learning model corresponding to each data subset; and sending the data subsets and corresponding machine learning models to respective data platforms, so that the respective data platforms use respective data subsets to train the corresponding machine learning models for processing corresponding types of data.

## Description

### CROSS-REFERENCE TO RELATED APPLICATIONS

The present application is based on and claims priority to China Patent Application No. 201910468502.X filed on May 31, 2019, the disclosure of which is incorporated by reference herein in its entirety.

### TECHNICAL FIELD

The present disclosure relates to the field of computer technology, and in particular to a data processing method, a data processing apparatus and a computer-readable storage medium.

### BACKGROUND

During the process of data processing, in order to obtain a better processing result, it is often necessary to process related data from different sources. For example, related data from an electronic-commerce platform and a banking platform are processed at the same time.

In related technologies, data from different sources is uniformly processed by using a machine learning model that is configured in advance.

### SUMMARY

According to some embodiments of the present disclosure, a data processing method is provided. The method comprises the steps of: combining original data from different data platforms to create a training data set, according to an overlap condition between the original data from different data platforms; classifying data in the training data set to obtain a plurality of data subsets, according to attributes of the data in the training data set; determining a machine learning model corresponding to each data subset, according to a type of the each data subset; and sending the each data subset and its corresponding machine learning model to each of a plurality of data platforms, so that each data platform uses the each data subset to train a machine learning model corresponding to the each data subset so as to process data of a type corresponding to the each data subset.

In some embodiments, the original data comprises user identifiers and user characteristics, and the step of combining original data from different data platforms to create a training data set comprises: selecting data with a same user identifier in the original data from different data platforms to create the training data set, in the case where an overlap degree of user identifiers exceeds an overlap degree of user characteristics in the original data from different data platforms.

In some embodiments, the original data comprises user identifiers and user characteristics, and the step of combining selecting data with a same user characteristic in the original data from different data platforms to create the training data set, in the case where an overlap degree of user characteristics exceeds an overlap degree of user identifiers in the original data from different data platforms.

In some embodiments, the original data comprises user identifiers and user characteristics, and the step of combining original data from different data platforms to create a training data set comprises: determining which data platform has original data comprising label features, in the case where neither an overlap degree of user characteristics nor an overlap degree of user identifiers in original data from different data platforms exceeds a threshold; and creating the training data set, according to the label features.

In some embodiments, the data processing method further comprises: calculating a second gradient, according to first gradients returned by the data platforms, wherein a first gradient is a gradient of a loss function obtained by a data platform training its corresponding machine learning model according to its corresponding data subset; and sending the second gradient to the each data platform, so that the each data platform trains its corresponding machine learning model according to the second gradient.

In some embodiments, for any data platform, the first gradient is calculated by the any data platform based on an intermediate value calculated by itself and intermediate values from other data platforms.

In some embodiments, the step of calculating a second gradient according to first gradients returned by the data platforms comprises : calculating the second gradient, according to a weighted sum of each of the first gradients returned by the each of the data platforms.

In some embodiments, during a training process, a training result of the training data set is determined according to a training result of each the data subset, and the training result of each data subset is obtained by training a machine learning model corresponding to the each data subset by the each data platform using the each data subset.

In some embodiments, the step of sending the each data subset to each of a plurality of data platforms comprises: encrypting and sending the each data subset to the each of a plurality of data platforms.

In some embodiments, the attributes comprise: at least one of spatial attributes, temporal attributes, and corresponding business attributes of the data.

According to other embodiments of the present disclosure, a method for processing electronic text data is provided. The method comprises the steps of: combining original electronic text data from different data platforms to create a training data set, according to an overlap condition between the original electronic text data from different data platforms wherein a type of the data set platform is at least one of a bank data platform and an electronic-commerce data platform, and the original electronic text data is electronic text data storing user-related information and business-related information; classifying data in the training data set to obtain a plurality of data subsets, according to attributes of the data in the training data set; determining a machine learning model corresponding to each data subset, according to a type of the each data subset; and sending the each data subset and its corresponding machine learning model to each of a plurality of data platforms, so that each data platform uses the each data subset to train a machine learning model corresponding to the each data subset so as to process data of a type corresponding to the each data subset.

According to other embodiments of the present disclosure, a data processing apparatus is provided. The apparatus comprises: a creating unit configured to combine original data from different data platforms to create a training data set according to an overlap condition between the original data from different data platforms; a classifying unit is configured to classify data in the training data set to obtain a plurality of data subsets, according to attributes of the data in the training data set; a determining unit is configured to determine a machine learning model corresponding to each data subset, according to a type of the each data subset; and a sending unit configured to send the each data subset and its corresponding machine learning model to each of a plurality of data platforms, so that each data platform uses the each data subset to train a machine learning model corresponding to the each data subset so as to process data of a type corresponding to the each data subset.

According to still other embodiments of the present disclosure, a data processing apparatus is provided. The apparatus comprises: a processor configured to combine original data from different data platforms to create a training data set according to an overlap condition between the original data from different data platforms, classify data in the training data set to obtain a plurality of data subsets, according to attributes of the data in the training data set, and determine a machine learning model corresponding to each data subset, according to a type of the each data subset; a transmitter configured to send the each data subset and its corresponding machine learning model to each of a plurality of data platforms, so that each data platform uses the each data subset to train a machine learning model corresponding to the each data subset so as to process data of a type corresponding to the each data subset; and a receiver configured to receive the original data from different data platforms .

According to yet other embodiments of the present disclosure, a data processing apparatus is provided. The apparatus comprises: a memory; and a processor coupled to the memory, wherein the processor is configured to perform the data processing method according to any one of the above-described embodiments based on instructions stored in the memory.

According to yet other embodiments of the present disclosure, a computer readable storage medium is provided. In the computer readable storage medium, a computer program is stored, wherein the data processing method according to any one of the above-described embodiments is implemented when the program is executed by a processor.

### BRIEF DESCRIPTION OF THE ACCOMPANYING DRAWINGS

The accompanying drawings which constitute part of this specification, illustrate the exemplary embodiments of the present disclosure, and together with this specification, serve to explain the principles of the present disclosure.

The present disclosure may be more explicitly understood from the following detailed description with reference to the accompanying drawings, in which:
Fig. 1 shows a flowchart of some embodiments of the data processing method of the present disclosure;
Fig. 2 shows a flowchart of other embodiments of the data processing method of the present disclosure;
Fig. 3 shows a block diagram of some embodiments of the data processing apparatus of the present disclosure;
Fig. 4 shows a block diagram of other embodiments of the data processing apparatus of the present disclosure;
Fig. 5 shows a block diagram of still other embodiments of the data processing apparatus of the present disclosure;
Fig. 6 shows a block diagram of yet other embodiments of the data processing apparatus of the present disclosure.

### DETAILED DESCRIPTION

Various exemplary embodiments of the present disclosure will now be described in detail with reference to the accompanying drawings. It should be noted that: unless additionally specified, the relative arrangements, numerical expressions and numerical values of the components and steps expounded in these examples do not limit the scope of the present disclosure.

At the same time, it should be understood that, for ease of description, the dimensions of various parts shown in the accompanying drawings are not drawn according to actual proportional relations.

The following descriptions of at least one exemplary embodiment which are in fact merely illustrative, shall by no means serve as any delimitation on the present disclosure as well as its application or use.

The techniques, methods, and apparatuses known to those of ordinary skill in the relevant art might not be discussed in detail. However, the techniques, methods, and apparatuses shall be considered as a part of the granted description where appropriate.

Among all the examples shown and discussed here, any specific value shall be construed as being merely exemplary, rather than as being restrictive. Thus, other examples in the exemplary embodiments may have different values.

It is to be noted that: similar reference signs and letters present similar items in the following accompanying drawings, and therefore, once an item is defined in one accompanying drawing, it is necessary to make further discussion on the same in the subsequent accompanying drawings.

The inventors of the present disclosure have found that the above-described related technologies are present with the following problems: the data processing effect depends on the generalization ability of the machine learning model, which results in poor applicability and low accuracy of data processing.

In view of this, the present disclosure proposes a technical solution of data processing, which is capable of improving the applicability and accuracy of data processing.

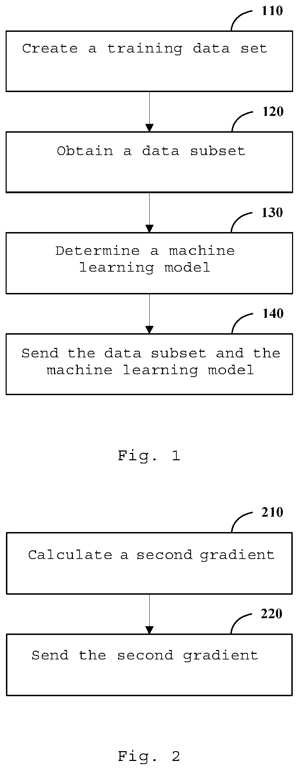

Fig. 1 shows a flowchart of some embodiments of the data processing method of the present disclosure.

As shown in Fig. 1, the method comprises: step 110 of creating a training data set; step 120 of obtaining a data subset; step 130 of determining a machine learning model; and step 140 of sending the data subset and the machine learning model.

In step 110, a training data set is created according to an overlap condition between original data from different data platforms. For example, the type of the data set platform may be at least one of a bank data platform and an electronic-commerce data platform, and the original data is electronic text data storing user-related information and business-related information.

In some embodiments, different data platforms of enterprises and institutions provide a third-party server (for example, a neutral server) with their own original data at the same time. Original data from different sources may be stored in different places . For example, the original data A comes from an enterprise and uses a cloud storage manner; the original data B comes from a government supervision and uses a local hard disk storage manner.

In some embodiments, a training data set may be created according to the original data based on the collected metadata. For example, the original data comprises user identifiers and user characteristics.

In some embodiments, the user characteristics may be various attributes of the user. For example, the data of the electronic-commerce platform may comprise user characteristics such as the user's name, gender, expenditure, and shopping frequency; the data of the banking platform may also comprise user characteristics such as the user's name and gender that overlap with the electronic-commerce platform, and may further comprise unique user characteristics such as income and loan.

Therefore, it is possible to create a training data set based on the original data according to whether there are more same user identifiers (for example, name, ID and the like) or more overlapping user characteristics in the original data from different sources.

In some embodiments, in the case where the overlap degree of user identifiers exceeds the overlap degree of user characteristics between original data from different sources, data with same user identifiers in original data from different sources is selected to create a training data set. For example, an electronic-commerce platform and a banking platform may have a large number of same user groups. However, since the platform businesses are different, some users have different characteristics. In this case, the data of same users in each data platform may be selected to create a common training data set.

In some embodiments, in the case where the overlap degree of user characteristics exceeds the overlap degree of user identifiers between the original data from different sources, data with same user characteristics in the original data from different sources is selected to create a training data set. For example, since two banking platforms in different regions have a common platform business, there is a high overlap degree in user characteristics; since their user groups come from different regions, there is a low overlap degree of users. In this case, data with same user characteristics in each data platform may be selected to create a common training data set.

In some embodiments, in the case where neither the overlap degree of user characteristics nor the overlap degree of user identifiers between original data from different sources exceeds a threshold, it is determined which data platform has original data comprising label features. According to the label features, a training data set is created. The label features may be, for example, identifiers configured for user data to label attributes such as a student user and a business users. For example, it is possible to determine which data platform is a label feature provider, which platform data is required to be inferred with label features, and create a training data set through a federated transfer learning method during federated learning.

In this way, related data of different platforms may be adequately utilized for training and processing, thereby improving the accuracy of training and the accuracy of data processing.

In some embodiments, after a training data set is created, each data platform may be informed to perform automatic feature engineering such as missing value filling, feature selection, and outlier replacement of the data. It is also possible to perform automatic feature engineering before creating a training data set.

In step 120, the data in the training data set are classified to obtain a plurality of data subsets according to the attribute of each data in the training data set. For example, the attributes may comprise at least one of spatial attributes, temporal attributes, and corresponding business attributes of the data.

In some embodiments, classification may be performed according to the spatial attributes and the temporal attributes of the data. For example, the data may be classified as crowd flow data of abnormal weather conditions on weekdays and crowd flow data of normal weather conditions on weekends through a classification method such as clustering.

In some embodiments, classification may also be performed according to corresponding business attributes of the data. For example, the data may be classified as traffic data and crowd flow data through a classification method such as clustering.

In step 130, a machine learning model corresponding to each data subset is determined according to the type of each data subset. For example, the server may configure an optimal model framework in advance as a machine learning model corresponding to various types of data according to factors such as modeling requirements (for example, solving a classification problem, a regression problem and the like), data types, and prior knowledge.

In step 140, each data subset and its corresponding respective machine learning model are sent to each data platform, so that each data platform uses each data subset to train each corresponding machine learning model for processing a corresponding type of data.

The data processed by the trained machine learning model may be user-related information and business-related information stored by different data platforms (for example, a bank data platform, an electronic-commerce data platform and the like) using electronic text data.

Fig. 2 shows a flowchart of other embodiments of the data processing method of the present disclosure.

As shown in Fig. 2, compared with the embodiment in Fig. 1, the method further comprises: step 210 of calculating a second gradient; and step 220 of sending the second gradient.

In step 210, a second gradient is calculated according to the first gradients returned by data platforms . Each of the first gradient is calculated by the data platform using its corresponding machine learning model according to each data subset. For example, the second gradient is calculated by the weighted sum of each first gradient.

In some embodiments, each data platform uses each received data subset to train each machine learning model so as to obtain the first gradient of the loss function. Each data platform may send the calculated first gradient to the server; and the server calculates the second gradient according to each first gradient.

For example, the data platform uses each received data subset to train each machine learning model so as to obtain the intermediate value. The intermediate value may be the gradient of the loss function or the Gini coefficient. Then, the data platform sends the intermediate value calculated by itself to other data platforms; the data platform receives the intermediate values sent by other data platforms; and the data platform calculates the first gradient according to the intermediate value calculated by itself and the received intermediate value.

In step 220, the second gradient is sent to each data platform, so that each data platform trains each corresponding machine learning model according to the second gradient. For example, the data platform may update the gradient of the machine learning model so as to perform training according to the second gradient.

In some embodiments, the data platform has label features of the data. The data platform may calculate the loss function value according to the label features, and return the loss function value to the server; and the server calculates the second gradient according to each first gradient and the loss function value.

In this way, the machine learning model may be trained by fusing related data of different data platforms to improve the performance of the machine learning model, thereby improving the accuracy of data processing.

In some embodiments, each data subset may be encrypted and sent to each data platform. For example, a public key may be sent to each data platform, so that each data platform uses the public key to encrypt the original data and then sends it to the server to create a training data set (for example, the encryption sample alignment method during federated learning may be used to create a training data set). The server divides the encrypted training data set into a plurality of data subsets and sends them to data platforms. Each data platform trains the machine learning model according to the encrypted data subset, and obtains the encrypted first gradient and second gradient through the interactively encrypted intermediate value so as to train the machine learning model (for example, it may be implemented using the encryption model training method during federated learning).

In this way, on the premise of ensuring that there is no leakage of user privacy, a training data set shared by all platforms may be created to improve the performance of the machine learning model, thereby improving the accuracy of data processing.

In some embodiments, the training result of the training data set is determined according to the training result of each subset. The training result of each subset is obtained by processing the each corresponding data subset by each data platform using each machine learning model.

In some embodiments, after the training result is obtained, log recording may be performed, and a visual analysis of the model result may be made.

In some embodiments, the trained machine learning model may be saved on a third-party server. It is also possible to save a part of the machine learning model on each data platform, or save the machine learning model only on a specific data platform so as to meet the confidentiality requirements.

In some embodiments, during the process of using the machine learning model on the data platform, each machine learning model may be used to process its corresponding type of data so as to obtain each sub-training result. The sub-training results may be spliced into the final training result of the data.

In the above-described embodiments, according to an overlap condition of the data, a training data set is created in the original data from different sources, and different types of data are used to train different machine learning models so as to process the corresponding data. In this way, different processing methods may be matched according to the type of the data, thereby improving the applicability and accuracy of data processing.

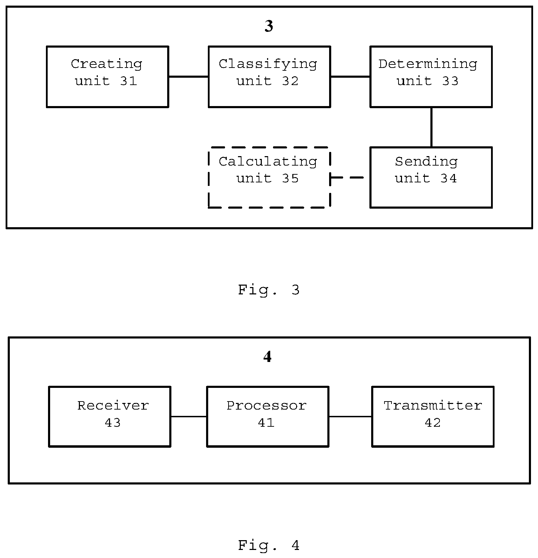

Fig. 3 shows a block diagram of some embodiments of the data processing apparatus of the present disclosure.

As shown in Fig. 3, the data processing apparatus 3 comprises a creating unit 31, a classifying unit 32, a determining unit 33, and a sending unit 34.

The creating unit 31 creates a training data set according to an overlap condition between the original data from different data platforms. For example, the original data comprises user identifiers and user characteristics.

In some embodiments, in the case where the overlap degree of user identifiers between original data from different sources exceeds the overlap degree of user characteristics, the creating unit 31 selects data with same user identifiers in original data from different sources to create a training data set.

In some embodiments, in the case where the overlap degree of user characteristics between the original data from different sources exceeds the overlap degree of user identifiers, the creating unit 31 selects data with common user characteristics in the original data from different sources to create the training data set.

In some embodiments, in the case where neither the overlap degree of user characteristics nor the overlap degree of user identifiers between original data from different sources exceeds a threshold, the creating unit 31 determines which data platform has original data comprising label features; and the creating unit 31 creates a training data set based on the label features.

The classifying unit 32 classifies the data in the training data set to obtain a plurality of data subsets according to the attribute of each data in the training data set. For example, the attributes comprise: at least one of spatial attributes, temporal attributes, and corresponding business attributes of the data. The determining unit 33 determines a machine learning model corresponding to each data subset according to the type of each data subset.

The sending unit 34 sends each data subset and its corresponding respective machine learning model to each data platform, so that each data platform uses each data subset to train each corresponding machine learning model for processing a corresponding type of data. For example, the sending unit 34 encrypts and sends each data subset to each data platform.

In some embodiments, the data processing apparatus 3 further comprises a calculation unit 35. The calculation unit 35 calculates the second gradient according to each first gradient returned by each data platform. The first gradient is calculated by each data platform using each corresponding machine learning model according to each data subset. For example, the first gradient is calculated by each data platform based on the intermediate value calculated by itself and the intermediate values calculated by other data platforms.

In some embodiments, the sending unit 34 sends the second gradient to each data platform, so that each data platform trains the each corresponding machine learning model according to the second gradient.

In some embodiments, the training result of the training data set is determined according to the training result of each subset, and the training result of each subset is obtained by each data platform using each machine learning model to process each corresponding data subset.

In the above-described embodiments, according to an overlap condition of the data, a training data set is created in the original data from different sources, and different types of data are used to train different machine learning models to process the corresponding data. In this way, different processing methods may be matched according to a type of the data, thereby improving the applicability and accuracy of data processing.

Fig. 4 shows a block diagram of other embodiments of the data processing apparatus of the present disclosure.

As shown in Fig. 4, the data processing apparatus 4 comprises a processor 41, a transmitter 42 and a receiver 43.

The processor 41 creates a training data set according to an overlap condition between the original data from different data platforms. The processor 41 classifies the data in the training data set to obtain a plurality of data subsets according to the attribute of each data in the training data set. The processor 41 determines the machine learning model corresponding to each data subset according to the type of each data subset.

The transmitter 42 sends each data subset and its each corresponding machine learning model to each data platform, so that each data platform uses each data subset to train each corresponding machine learning model so as to process data of a corresponding type.

The receiver 43 receives original data from different data platforms.

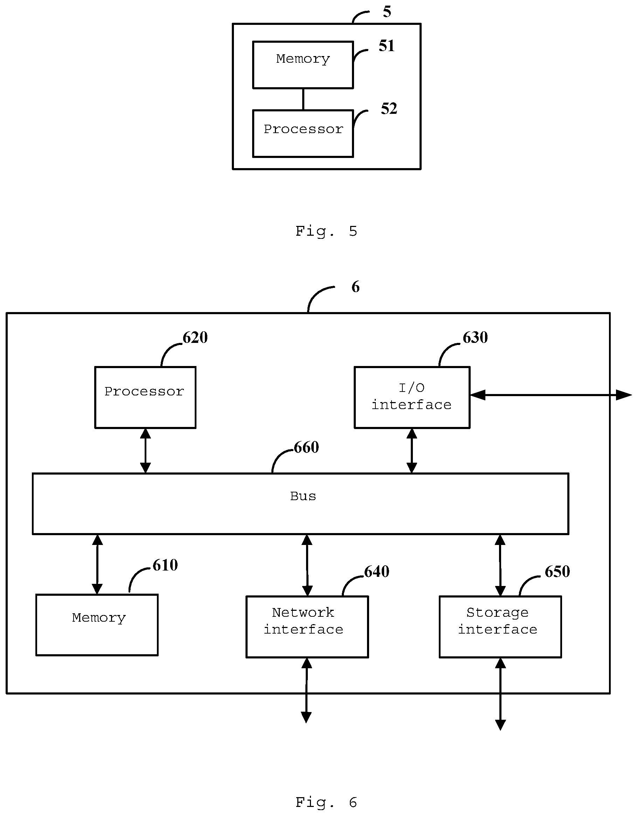

Fig. 5 shows a block diagram of still other embodiments of the data processing apparatus of the present disclosure.

As shown in Fig. 5, the data processing apparatus 5 in this embodiment comprises: a memory 51; and a processor 52 coupled to the memory 51, wherein the processor 52 is configured to perform the data processing method according to any embodiment of the present disclosure based on the instructions stored in the memory 51.

Wherein, the memory 51 may comprise, for example, a system memory, a fixed non-volatile storage medium, or the like. The system memory stores, for example, an operation system, an application, a boot loader, a database and other programs.

Fig. 6 shows a block diagram of yet other embodiments of the data processing apparatus of the present disclosure.

As shown in Fig. 6, the data processing apparatus 6 in this embodiment comprises: a memory 610; and a processor 620 coupled to the memory 610, wherein the processor 620 is configured to perform the data processing method according to any one of the foregoing embodiments based on the instructions stored in the memory 610.

The memory 610 may comprise, for example, a system memory, a fixed non-volatile storage medium, and the like. The system memory stores, for example, an operation system, an application, a boot loader, and other programs.

The data processing apparatus 6 may further comprise an I/O interface 630, a network interface 640, a storage interface 650, and the like. These interfaces 630, 640, 650 as well as the memory 610 and the processor 620 therebetween may be connected, for example, via a bus 660. Wherein, the I/O interface 630 provides a connection interface for input and output devices such as a display, a mouse, a keyboard, and a touch screen. The network interface 640 provides a connection interface for various networked devices. The storage interface 650 provides a connection interface for an external storage device such as an SD card or a USB flash disk.

Those skilled in the art will appreciate that the embodiments of the present disclosure may be provided as a method, system, or computer program product. Accordingly, the present disclosure may take the form of an entirely hardware embodiment, an entirely software embodiment, or a combination of software and hardware aspects. Moreover, the present disclosure may take the form of a computer program product embodied in one or more computer-usable non-transitory storage media (comprising but not limited to disk memory, CD-ROM, optical memory, and the like) containing computer usable program codes therein.

Hereto, the data processing method, the data processing apparatus, and the computer-readable storage medium according to the present disclosure have been described in detail. Some details well known in the art are not described in order to avoid obscuring the concept of the present disclosure. According to the above description, those skilled in the art would fully understand how to implement the technical solutions disclosed here.

The method and system of the present disclosure may be implemented in many manners. For example, the method and system of the present disclosure may be implemented by software, hardware, firmware, or any combination of software, hardware, and firmware. The above-described sequence for the steps of the method is merely for illustrative purposes, and the steps of the method of the present disclosure are not limited to the sequence specifically described above unless otherwise specified. Moreover, in some embodiments, the present disclosure may also be embodied as programs recorded in a recording medium, which comprise machine readable instructions for implementing the method according to the present disclosure. Thus, the present disclosure also covers a recording medium that stores programs for performing the method according to the present disclosure.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above embodiments may be made without departing from the scope and spirit of the present disclosure. The scope of the present disclosure is defined by the appended claims.

## Claims

1. A data processing method, comprising:
combining original data from a plurality of data platforms to create a training data set, according to an overlap condition between the original data from different data platforms;
classifying data in the training data set to obtain a plurality of data subsets, according to attributes of the data in the training data set;
determining a machine learning model corresponding to each data subset, according to a type of the each data subset; and
sending the each data subset and corresponding machine learning model to each of the plurality of data platforms, so that each data platform uses the each data subset to train a machine learning model corresponding to the each data subset for processing data of the type corresponding to the each data subset.

2. The data processing method according to claim 1, wherein the original data comprises user identifiers and user characteristics, and the combining original data from a plurality of data platforms to create a training data set comprises:
selecting data with a same user identifier in the original data from different data platforms to create the training data set, in the case where an overlap degree of user identifiers exceeds an overlap degree of user characteristics in the original data from different data platforms.

3. The data processing method according to claim 1, wherein the original data comprises user identifiers and user characteristics, and the combining original data from different data platforms to create a training data set comprises:
selecting data with a same user characteristic in the original data from different data platforms to create the training data set, in the case where an overlap degree of user characteristics exceeds an overlap degree of user identifiers in the original data from different data platforms.

4. The data processing method according to claim 1, wherein the original data comprises user identifiers and user characteristics, and the combining original data from different data platforms to create a training data set comprises:
determining which data platform has original data comprising label features, in the case where neither an overlap degree of user characteristics nor an overlap degree of user identifiers in original data from different data platforms exceeds a threshold; and
creating the training data set, according to the label features.

5. The data processing method according to claim 1, further comprising:
calculating a second gradient, according to first gradients returned by the data platforms, wherein one of the first gradients is a gradient of a loss function obtained by a data platform training its corresponding machine learning model according to its corresponding data subset; and
sending the second gradient to the each data platform, so that the each data platform trains corresponding machine learning model according to the second gradient.

6. The data processing method according to claim 5, wherein for any data platform, the first gradient is calculated by the any data platform based on an intermediate value calculated by itself and intermediate values from other data platforms.

7. The data processing method according to claim 5, wherein calculating a second gradient according to first gradients returned by the data platforms comprises:
calculating the second gradient, according to a weighted sum of each of the first gradients returned by the each of the data platforms.

8. The data processing method according to any one of claims 1 to 7, wherein during a training process, a training result of the training data set is determined according to a training result of each the data subset, and the training result of each data subset is obtained by training a machine learning model corresponding to the each data subset by the each data platform using the each data subset.

9. The data processing method according to any one of claims 1 to 7, wherein the sending the each data subset to each of a plurality of data platforms comprises:
encrypting and sending the each data subset to the each of a plurality of data platforms.

10. The data processing method according to any one of claims 1 to 7, wherein the attributes comprise at least one of spatial attributes, temporal attributes, and corresponding business attributes of the data.

11. A method for processing electronic text data, comprising:
combining original electronic text data from different data platforms to create a training data set, according to an overlap condition between the original electronic text data from different data platforms wherein a type of the data platform is at least one of a bank data platform or an electronic-commerce data platform, and the original electronic text data are electronic text data storing user-related information and business-related information;
classifying data in the training data set to obtain a plurality of data subsets, according to attributes of the data in the training data set;
determining a machine learning model corresponding to each data subset, according to a type of the each data subset; and
sending the each data subset and its corresponding machine learning model to each of a plurality of data platforms, so that each data platform uses the each data subset to train a machine learning model corresponding to the each data subset so as to process data of a type corresponding to the each data subset.

12. A data processing apparatus, comprising:
a creating unit configured to combine original data from different data platforms to create a training data set according to an overlap condition between the original data from different data platforms;
a classifying unit is configured to classify data in the training data set to obtain a plurality of data subsets, according to attributes of the data in the training data set;
a determining unit is configured to determine a machine learning model corresponding to each data subset, according to a type of the each data subset; and
a sending unit configured to send the each data subset and its corresponding machine learning model to each of a plurality of data platforms, so that each data platform uses the each data subset to train a machine learning model corresponding to the each data subset so as to process data of a type corresponding to the each data subset.

13. A data processing apparatus, comprising:
a processor configured to combine original data from a plurality of data platforms to create a training data set according to an overlap condition between the original data from different data platforms, classify data in the training data set to obtain a plurality of data subsets, according to attributes of the data in the training data set, and determine a machine learning model corresponding to each data subset, according to a type of the each data subset;
a transmitter configured to send the each data subset and its corresponding machine learning model to each of the plurality of data platforms, so that each data platform uses the each data subset to train a machine learning model corresponding to the each data subset for processing data of the type corresponding to the each data subset; and
a receiver configured to receive the original data from different data platforms.

14. A data processing apparatus, comprising:
a memory; and
a processor coupled to the memory, wherein the processor is configured to perform the data processing method according to any one of claims 1 to 10 based on instructions stored in the memory.

15. A computer readable storage medium, in which a computer program is stored, wherein the data processing method according to any one of claims 1 to 10 is implemented when the program is executed by a processor.
